# EUROPÄISCHE PATENTANMELDUNG

(11) **EP 2 466 247 A1**
(43) Veröffentlichungstag der Anmeldung: **20.06.2012**
(21) Anmeldenummer: 11009635.1
(22) Anmeldetag: 07.12.2011
(51) Int. Cl.: F41G 7/22, G01S 3/781, G01S 3/784, G02B 17/06, G02B 17/08

(54) **Verfahren zum Steuern eines Lenkflugkörpers und Suchkopf für einen Lenkflugkörper**

(30) Priorität: 15.12.2010 DE 102010054748; 22.12.2010 DE 102010055493
(71) Anmelder: Diehl BGT Defence GmbH & Co.KG, 88662 Überlingen (DE)
(72) Erfinder: Barenz, Joachim, Dr., 88662 Überlingen (DE); Kordulla, Hans, 78354 Sipplingen (DE); Eckhardt, Reiner, 88662 Überlingen (DE); Kuppel, Hubert, 78333 Stockbach (DE); Tholl, Hans Dieter, Dr., 88682 SalemUhldingen-Mühlhofen (DE); Baumann, Rainer, 88662 Überlingen (DE)
(74) Vertreter: Diehl Patentabteilung

(57) **Zusammenfassung**

Die Erfindung geht aus von einem Verfahren zum Steuern eines Lenkflugkörpers (2) mit einem einen Detektor (20) aufweisenden Suchkopf (4), bei dem eine Objektszene (18) auf den Detektor (20), der eine Vielzahl von Detektorzellen umfasst, abgebildet und ein erhaltenes Bild ausgewertet wird und ein Steuersystem (62) den Lenkflugkörper (2) anhand von Daten aus der Bildauswertung steuert.

Um den Lenkflugkörper auch auf ein kleines und weit entferntes Ziel zuverlässig steuern zu können, wird vorgeschlagen, dass die Abbildung auf den Detektor (20) durch ein Detektorobjektiv (16, 76) mit mehreren Linsen (78, 80, 82, 84) erfolgt.

## Beschreibung

Die Erfindung betrifft ein Verfahren zum Steuern eines Lenkflugkörpers mit einem Suchkopf, bei dem eine Objektszene auf den Detektor, der eine Vielzahl von Detektorzellen umfasst, abgebildet und ein erhaltenes Bild ausgewertet wird und ein Steuersystem den Lenkflugkörper anhand von Daten aus der Bildauswertung steuert.

Zielsuchende Flugkörper sind mit einem Suchkopf mit Sucheroptik ausgestattet, die der Bewegung eines sich bewegenden Ziels nachgeführt werden kann. Dazu ist eine Eingangsoptik beweglich zum Dom des Flugkörpers beziehungsweise dessen Gehäuse gelagert und motorisch so angetrieben, dass sie in einem großen Winkelbereich verschwenkbar ist. Eine solche Sucheroptik ist aus der DE 101 35 222 A1 bekannt.

Zum Erfassen von Zielen, die sich in einer sehr weiten Entfernung vom Flugkörper befinden, ist eine sehr exakte Abbildung mit geringen Bildfehlern auf einer bildgebenden Einheit, beispielsweise einem Detektor, vorteilhaft, um das Ziel auch in großer Entfernung zuverlässig als solches erfassen zu können.

Es ist eine Aufgabe der vorliegenden Erfindung, ein Verfahren zum Steuern eines Lenkflugkörpers anzugeben, mit dem der Lenkflugkörper auch auf ein kleines und weit entferntes Ziel zuverlässig gesteuert werden kann.

Diese Aufgabe wird durch ein Verfahren der eingangsgenannten Art gelöst, bei dem erfindungsgemäß die Abbildung auf den Detektor durch ein Detektorobjektiv mit mehreren Linsen erfolgt. Abbildungsfehler können verringert oder gezielt gewählt werden, so dass das Ziel in einer für die Zielverfolgung vorteilhaften Weise abgebildet werden kann.

Die Erfindung geht von der Überlegung aus, dass eine hohe Auflösung gestattende Optik, insbesondere eine Cassegrainoptik, eine Objektszene sehr gerichtet abtastet, also das Gesichtsfeld zwar klein, aber noch groß genug zur zuverlässigen Ausrichtung eines Flugkörpers ist. Mit wachsender Geschwindigkeit moderner Flugkörper ist jedoch eine gute Auffassung des Ziels in einer immer höheren Entfernung wünschenswert, um frühzeitig Zielbewegungen nachverfolgen und den Flugkörper entsprechend ausrichten zu können, sodass er im Endanflug eine hohe Manöverüberlegenheit gegenüber dem Ziel behält. Bei einer Abbildung eines kleinen Ziels aus einer Entfernung von mehreren Kilometern kann jedoch das Problem der Bildfehler störend wirken. Zum Erreichen einer besonders guten Bildqualität müssen solche eventuell auftretenden Bildfehler daher korrigiert werden. Durch den Einsatz eines Objektivs mit mehreren Linsen als Detektoroptik können solche Bildfehler ausreichend ausgeglichen werden und eine hohe Auflösung eines weit entfernten Ziels kann erreicht werden.

Der Suchkopf ist vorteilhafterweise an der Spitze des Flugkörpers und insbesondere unter einem Dom angeordnet. Der Detektor ist zweckmäßigerweise gehäusefest angeordnet. Hierzu kann er starr mit einem Gehäuse verbunden sein, das z.B. die Cassegrainoptik umgibt, beispielsweise mit einem Flugkörpergehäuse.

Bei dem Lenkflugkörper kann es sich um einen unbemannten Flugkörper handeln, vorteilhafterweise um eine Rakete, wie eine Abwehrrakete zum Zerstören eines Ziels. Der Detektor ist zweckmäßigerweise ein Matrix-Detektor mit N x M Detektorzellen, wobei N = M sein kann, und die Detektorzellen vorzugsweise rechteckig sind, insbesondere quadratisch. Das Bild kann anhand von bildverarbeitenden Methoden ausgewertet und ein Ziel als solches erkannt werden. Die Daten sind zweckmäßigerweise Zieldaten, beispielsweise die Lage die Ziels auf dem Detektor bzw. im Sehfeld, eine Bewegungsrichtung und/oder eine Bewegungsgeschwindigkeit des Ziels. Anhand dieser Daten kann der Lenkflugkörper gesteuert werden, beispielsweise in Richtung auf das Ziel, wobei eine vorbestimmte Navigation, beispielsweise die Proportionalnavigation, verwendet wird.

Vorteilhafterweise erfolgt die Abbildung auf den Detektor mit einer katadioptrischen Optik, insbesondere eine Cassegrainoptik, die eine Detektoroptik, eine relativ zur Detektoroptik beweglichen Eingangsoptik in Form einer Spiegeloptik mit einem konkaven asphärischen Hauptspiegel und einem konvexen asphärischen Fangspiegel, z.B. einer Cassegrainoptik, und ein optisches Gelenk zum Nachführen des Strahlengangs auf den Detektor bei einer Bewegung der Spiegeloptik umfasst. Unter einer Cassegrainoptik wird im Folgenden eine Optik mit zumindest zwei Spiegeln verstanden, von denen der erste Spiegel - also derjenige Spiegel der Cassegrainoptik, auf den Strahlen aus der Objektszene zuerst auftreffen, ein konkaver, insbesondere asphärischer Hauptspiegel ist und der zweite Spiegel ein konvexer, insbesondere asphärischer Fangspiegel ist. Der Strahlgang aus der Objektszene verläuft über den Hauptspiegel direkt oder indirekt zum Fangspiegel und von dort auf einen Detektor zum Aufzeichnen eines Bildsignals aus der Objektszene. Die Cassegrainoptik ist zweckmäßigerweise Teil eines Suchkopfs eines Flugkörpers, sodass die Erfindung auch gerichtet sein kann auf einen Flugkörper mit einem Suchkopf umfassend eine erfindungsgemäße Cassegrainoptik.

Vorteilhafterweise sind Detektoroptik und Detektor unverkippbar zueinander angeordnet, wobei eine Rotation der Detektoroptik zum Detektor um die optische Achse möglich ist. Vorteilhaft ist es, wenn nur ein Teil des Detektorobjektivs unverkippbar zum Detektor angeordnet ist, sodass zumindest eine zweckmäßigerweise mehrere Linsen verkippbar relativ zum Detektor sind. Besonders vorteilhaft ist, wenn die Beweglichkeit entlang der optischen Achse gegeben ist, sodass eine einzelne Linse oder eine Linsengruppe auf der optischen Achse verschoben werden kann. Hierdurch kann ein Zoom-Objektiv gebildet werden.

Das optische Gelenk kann ein Spiegelgelenk mit mehreren Spiegelflächen sein. Besonders vorteilhaft ist das optische Gelenk ein Prismengelenk mit mehreren spiegelnden Prismen. Besonders vorteilhaft sind vier Spiegel beziehungsweise spiegelnde Prismenflächen.

Die Spiegeloptik ist relativ zur Detektoroptik und dem Detektor beweglich, zweckmäßigerweise drehbar und/oder schwenkbar. Auf diese Weise kann die Spiegeloptik um z.B. eine Rollachse und/oder eine Nickachse gedreht werden, wodurch eine besonders gute Beweglichkeit der Spiegeloptik erreicht wird. Vorteilhafterweise ist ein Primärteil des Prismengelenks mit der Spiegeloptik starr verbunden und ein Sekundärteil des Prismengelenks sowohl zur Spiegeloptik als auch zu zumindest eines Teils der Detektoroptik beweglich gelagert. Eine einfache Ausführung des optischen Gelenks kann erreicht werden, wenn der Strahlengang der Cassegrainoptik zumindest auf einem Teilweg innerhalb des optischen Gelenks symmetrisch zu einer Rollachse und einer Nickachse der Cassegrainoptik verläuft. Im Übergang von einem Primärteil zu einem Sekundärteil des optischen Gelenks verläuft der Strahlengang zweckmäßigerweise symmetrisch zur Nickachse.

Umfasst der Primärteil drei Spiegelflächen und Sekundärteil nur eine Spiegelfläche, so kann Aktuatoren zum Bewegen der Spiegeloptik besonders viel Raum zur Verfügung gestellt werden, ohne eine Beweglichkeit der Spiegeloptik stark einschränken zu müssen. Außerdem ist es vorteilhaft, wenn die Cassegrainoptik zwischen dem Primärteil und dem Sekundärteil ein Zwischenbild erzeugt, so dass die Möglichkeit für Abblendungen im Zwischenbild besteht. Vorteilhafterweise ist im Zwischenbild des Cassegrainobjektivs eine Feldblende, z.B. eine Kreisblende, angeordnet, wodurch der Anteil von auf den Detektor einfallendem Streulicht gering gehalten werden kann. Weiter vorteilhaft ist der Primärteil des optischen Gelenks monolithisch ausgeführt und umfasst drei Spiegelflächen. Durch die monolithische Ausführung bei relativ vielen Spiegelflächen können Reflexionsverluste gering gehalten werden.

In einer vorteilhaften Ausführungsform der Erfindung erfolgt die Abbildung derart, dass bei Abbildung einer Punktquelle der Objektszene auf der Detektorfläche die quadratische Fläche, die symmetrisch um die Punktabbildung liegt und in der genau 80% der Punktbildenergie eingeschlossen sind, bei jeder Lage des Punktbilds im Sehfeld des Detektors größer als die Bildelement-Rasterfläche eines Bildelements des Detektors und kleiner als das Vierfache davon ist. Die in Betracht zu ziehenden Flächen liegen hierbei vollständig innerhalb der Detektorfläche, also des sensiblen Bereichs des Detektors.

Im Bezug auf diese Ausführungsform der Erfindung geht die Erfindung von der Überlegung aus, dass kleine oder sehr weit entfernte Ziele nur sehr kleinflächig auf den Detektor abgebildet werden. Hierbei kann es bei einer herkömmlichen Optik vorkommen, dass das sehr klein abgebildete Ziel nur auf einer einzigen Detektorzelle abgebildet wird. Da jede Detektorzelle üblicherweise einen spektral unsensiblen Rand aufweist, der eine spektral sensible Fläche umgibt, führt ein Wandern des punktförmig abgebildeten Ziels über die Detektorfläche dazu, dass das Ziel, das zunächst vollflächig auf der sensiblen Fläche abgebildet wurde, anschließend zumindest teilweise auf den unsensiblen Rand fällt. Dies hat zur Folge, dass die gemessene Punktbildintensität des Ziels bei einer Bewegung des Ziels über die Detektorfläche stark schwankt. Eine solche Punktbildschwankung kann zu Auswertungsschwierigkeiten führen und damit ein Erkennen bzw. Verfolgen des Ziels erschweren.

Dieser Nachteil kann abgemildert werden, wenn ein Ziel, das bei einer scharfen Abbildung in einer Fläche abgebildet wird, die kleiner ist als die Fläche einer Detektorzelle, gewollt unscharf abgebildet wird, sodass sich deren Abbildungsfläche vergrößert. Werden stets zumindest zwei Detektorzellen zumindest teilweise abgedeckt, so wird stets auch ein Teil der Abbildung auf den spektral unsensiblen Rahmen erfolgen. Eine Energieschwankung auf den sensiblen Teil des Detektors kann somit gering gehalten und eine Punktbildschwankung ebenfalls gering gehalten werden.

Die Punktbildenergie ist die Energie des Punktbildstrahls, die in der quadratischen Fläche eingeschlossen ist. Eine solche Energie wird auch "Ensquared Energy" genannt. Die Punktbildenergie muss nicht in jedem möglichen Frequenzbereich im angegebenen Flächenbereich oder Toleranzbereich liegen. Es ist ausreichend, wenn es im Spektralbereich des Detektors der Fall ist.

Wie groß eine Abbildungsunschärfe bzw. eine Abbildungsfläche eines Punktziels auf der Detektorfläche ist, sollte vom Detektor und/oder dem Steuerungsverfahren des Lenkflugkörpers abhängig gemacht werden. Es ist jedoch vorteilhaft, wenn die Punktbildschwankung bei einer Wanderung der Punktquelle über die Detektorfläche möglichst gleich bleibt und möglichst nicht in der Mitte des Sehfelds stärker ist als am Rande des Sehfelds. Die Punktbildschwankung sollte daher in einem vorgebenden Toleranzband bleiben. Das Toleranzband kann auf mehrere Arten konkret angegeben werden. Es sollte sich jedoch auf eine Energieangabe des Punktbildstrahls beziehen, also ein Maß für die Energie, die der Punktbildstrahl auf die Detektorfläche bzw. die sensible Fläche des Detektors einbringt.

Die Punktbildschwankung kann gering gehalten werden, wenn die Abbildung derart auf den Detektor abgestimmt ist, dass bei Abbildung einer Punktquelle der Objektszene auf der Detektorfläche die von jeder möglichen und symmetrisch um die Punktabbildung liegenden quadratischen Fläche eingeschlossene Punktbildenergie in einem Toleranzband von 10 % verbleibt. Je nach Detektor kann es ausreichend sein, wenn die von jeder möglichen quadratischen Fläche eingeschlossene Punktbildenergie in einem Toleranzband von 10 % verbleibt, wobei die Fläche symmetrisch um die Punktabbildung liegt und eine Größe zwischen der Bildelement-Rasterfläche eines Bildelements des Detektors und dem Vierfachen davon aufweist, insbesondere zwischen dem 1,5-fachen und dem 2,5-fachen einer Bildelement-Rasterfläche. Das Toleranzband der Breite von 10 % schließt alle Punktbildenergien ein. Besonders vorteilhaft ist ein Toleranzband von 5 %.

Gleichwertig zur Punktbildenergie, also der im sensiblen Bereich der Detektorfläche registrierte Energie, kann jede andere Energiekennzahl des Punktbilds auf dem Detektor sein, z.B. die so genannte Modulationsübertragungsfunktion, das Strehlverhältnis, die so genannte Punktquellensensitivität (point-source-sensitivity, PSS) oder andere Größen. Die Modulationsübertragungsfunktion ist ein Maß für die Schärfe bzw. den Kontrast der Abbildung und mit Hilfe von ihr können durch Abbildungsfehler und Beugung verringerte Bildkontraste gemessen und/oder berechnet werden. Die Modulationsübertragungsfunktion kann definiert werden als das Verhältnis von Bildkontrast zu Objektkontrast, beispielsweise für eine sinusförmige Leuchtdiode. Oder als das Verhältnis von realem Bildkontrast zu idealem Bildkontrast. Das Strehlverhältnis ist ein Maß für die Abbildungsqualität eines optischen Systems über seinen gesamten Ortsfrequenzbereich. Das Strehlverhältnis kann aus einem Volumen unterhalb einer zweidimensional gemessenen Modulationsübertragungsfunktion dividiert durch ein Volumen unterhalb der idealen Modulationsübertragungsfunktion ermittelt werden.

Weiter ist es vorteilhaft, wenn die Abbildung derart auf den Detektor abgestimmt ist, dass bei Abbildung einer Punktquelle der Objektszene auf der Detektorfläche in jeder im Sehfeld des Detektors möglichen quadratischen Fläche, die symmetrisch um die Punktabbildung liegt und deren Kantenlänge das 1,5-fache des Bildelement-Rastermaßes beträgt, die eingeschlossene Punktbildenergie in einem Bereich von 80% **±** 10% liegt. Vorteilhaft ist das Toleranzband nicht größer als ± 5%, wobei eine besonders zuverlässige Zielverfolgung durch geringe Punktbildschwankung bei einem Toleranzband von maximal ± 2% erreicht werden kann.

Eine weitere vorteilhafte Ausführungsform der Erfindung sieht vor, dass beim Auslesen der Detektorzellen über mehrere Detektorzellen summiert wird, ein Quotient gebildet wird, beispielsweise durch die Anzahl der Detektorzellen, über die summiert wurde, dividiert wird, und dieser Quotient einer Detektorzelle, über die summiert wurde, zugewiesen wird. Hierdurch kann eine Punktbildschwankung noch weiter verringert werden. Dies geht zwar zu Lasten des Signals und einer möglichen Auflösung, die jedoch bei einem sehr klein abgebildeten Ziel nicht von großer Wichtigkeit ist.

Weiter wird vorgeschlagen, dass das Steuersystem einen abgebildeten Zielpunkt innerhalb des Sehfelds des Suchkopfs lokalisiert, insbesondere durch Mehrzellensummation, und die Winkel-Position des Zielpunkts relativ zu einer optischen Achse des Suchkopfs bestimmt. Mit diesem Verfahrensschritt kann die Proportionalnavigation, bei der eine Sichtliniendrehrate des Ziels als Regelgröße verwendet werden kann, besonders gut durchgeführt werden. Die optische Achse kann die Längsachse des Suchkopfs sein oder die optische Achse einer Eingangsoptik.

Die Erfindung ist außerdem gerichtet auf einen Suchkopf für einen Lenkflugkörper umfassend einen Detektor mit einer Vielzahl von Detektorzellen, ein optisches System zum Abbilden einer Objektszene auf dem Detektor mit einer Primäroptik, die einen transparenten Dom und innerhalb dessen eine Eingangsoptik aufweist, einem Prismengelenk und einem Roll-Nick-System zum Bewegen zumindest der Eingangsoptik um eine Rollachse und eine Nickachse.

Es ist eine Aufgabe dieser Erfindung, einen Suchkopf für einen Lenkflugkörper anzugeben, mit dem der Lenkflugkörper auch auf ein kleines und weit entferntes Ziel zuverlässig gesteuert werden kann.

Die Aufgabe wird durch den oben genannten Suchkopf gelöst, bei dem das optische System erfindungsgemäß eine Detektoroptik, insbesondere ein Detektorobjektiv, mit mehreren Linsen umfasst. Abbildungsfehler können verringert oder gezielt gewählt werden, so dass das Ziel in einer für die Zielverfolgung vorteilhaften Weise abgebildet werden kann. Das optische System kann eine Cassegrainoptik sein. Die Eingangsoptik ist zweckmäßigerweise eine Spiegeloptik.

Der Suchkopf ist zweckmäßigerweise in seinen optischen Elementen und ggf. dem Steuersystem so ausgeführt, dass er in der Lage ist, einen, mehrere oder alle der oben beschriebenen Verfahrensschritte auszuführen.

Eine vorteilhafte Ausführungsform dieser Erfindung sieht vor, dass der Detektor und das optische System so aufeinander abgestimmt sind, dass alle oder einige der erwähnten Verfahrensschritte ausführbar sind. Insbesondere verbleibt bei Abbildung einer Punktquelle der Objektszene auf der Detektorfläche die von jeder möglichen und symmetrisch um die Punktabbildung liegenden quadratischen Fläche eingeschlossene Punktbildenergie in einem Toleranzband von 10 %. Hierdurch kann eine Punktbildschwankung gering gehalten und ein sehr kleines und weit entferntes Ziel zuverlässig verfolgt werden. Eine Detektorzelle kann ein Bildelement des Detektors sein.

Bei einer gezielten Defokussierung eines Punktbilds zur Verringerung der Punktbildschwankung ist es wichtig, dass die Defokussierung möglichst gleich über das gesamte Sehfeld des Detektors eingestellt ist. Eine gute Einstellungsmöglichkeit, die zudem den Bau eines kompakten optischen Systems erlaubt, liegt darin, dass die Konstanz der Energiekennzahl im gesamten Sehfeld des Detektors durch eine Kombination von Farblängsfehler und Bildfeldwölbung bewirkt ist. Durch den Farblängsfehler kann ein großer Schärfentiefebereich erreicht werden, der jedoch zwangsläufig auf einem relativ niedrigen Energieniveau liegt. Durch die Bildfeldwölbung wird der außer Fokus liegende Bereich auf die Flächen zum Bildfeldrand hin bewirkt. Verläuft das Diagramm der Schärfentiefe, also beispielsweise der Ensquared Energy aufgetragen über den Fokusabstand, in einem Bereich flach, so kann dieser Bereich über die Bildfeldwölbung über das gesamte Sehfeld verteilt werden und somit eine Konstanz der Energiekennzahl erreicht werden.

Es ist vorteilhaft, wenn der Farblängsfehler im Spektralbereich des Detektors zumindest 100 µm beträgt. Hierdurch kann eine große Konstanz der Energiekennzahl erreicht werden.

Weiter ist es vorteilhaft, wenn die Konstanz der Energiekennzahl auch bei großen Temperaturschwankungen erhalten bleibt, vorteilhafterweise zwischen -60° C und +90° C in dem angegebenen Bereich. Hierzu ist es vorteilhaft, wenn die Eingangsoptik einen konkaven Hauptspiegel und einen konvexen Sekundärspiegel aufweist, der von einem Sekundärspiegelhalter gehalten ist, dessen Material eine zumindest teilweise Temperaturkompensation des optischen Systems bewirkt. Durch eine solche Temperaturausdehnung, die dem Temperaturgang der restlichen Optik entgegenwirkt, kann die zumindest teilweise passive Temperaturkompensation mit einfachen Mitteln erreicht werden. Vorteilhaft ist es, wenn der Primärspiegel aus einem Material mit einem ersten Temperaturausdehnungskoeffizienten besteht und der Fangspiegel und insbesondere dessen Trägermaterial aus einem Material mit einem anderem, insbesondere geringeren Temperaturausdehnungskoeffizienten.

Eine weitere vorteilhafte Ausführungsform der Erfindung sieht vor, dass das Detektorobjektiv zumindest drei, insbesondere vier Linsen umfasst, die die Objektszene auf den Detektor abbilden. Mit einer Anordnung aus vier Linsen kann ein sehr guter Kompromiss zwischen einer sehr guten Abbildung und einem klein bauenden und leichten Detektorobjektiv erreicht werden.

Eine radial kompakte Ausführung des Detektorobjektivs ist erreichbar, wenn die Dicke der drei Linsen jeweils zumindest 60 % von deren Radius beträgt. Hierdurch ist die axiale Bauraumlänge zwar relativ groß, der Suchkopf kann jedoch radial kompakt gehalten bleiben.

Die axiale Baugröße kann gering gehalten werden, wenn die Eingangsoptik einen konkaven Hauptspiegel und einen konvexen Sekundärspiegel aufweist und das Prismengelenk in einen Bauraum zwischen den beiden Spiegeln hineinragt.

Ebenfalls der Kompaktheit zuträglich ist es, wenn das Roll-Nick-System einen Nickantrieb aufweist, der um die Nickachse herumpositioniert ist, also auf zumindest zwei Seiten der Nickachse verteilt ist.

Das Roll-Nick-System kann einen zweigeteilten Nickantrieb aufweisen, dessen beide Teilmomentengeber einander symmetrisch im Bezug zu einer Rollachse des Roll-Nick-Systems gegenüberstehen. Hierzu kann einer kompakten Ausführung ein hohes Moment auf die Nickachse bzw. auf die um die Nickachse rotierbaren Elemente des optischen Systems aufgebracht werden.

Hierbei werden zweckmäßigerweise beide Teilmomentengeber von einer gemeinsamen Ansteuerelektronik betrieben, wobei die komplementären Wicklungen der Teilmomentengeber in Reihe geschaltet sind und von einer gemeinsamen Endstufe angesteuert und kommutiert werden. Dieser Aufbau ist einer präzisen Steuerung der Nickbewegung zuträglich.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: einen Längsschnitt durch den vorderen Teil eines Lenkflugkörpers mit einem Suchkopf,
- Fig. 2: eine alternative katadioptrische Optik für den Suchkopf aus Fig. 1 und
- Fig. 3: ein Punktbild Energiediagramm zur katadioptrischen Optik aus Fig. 2.

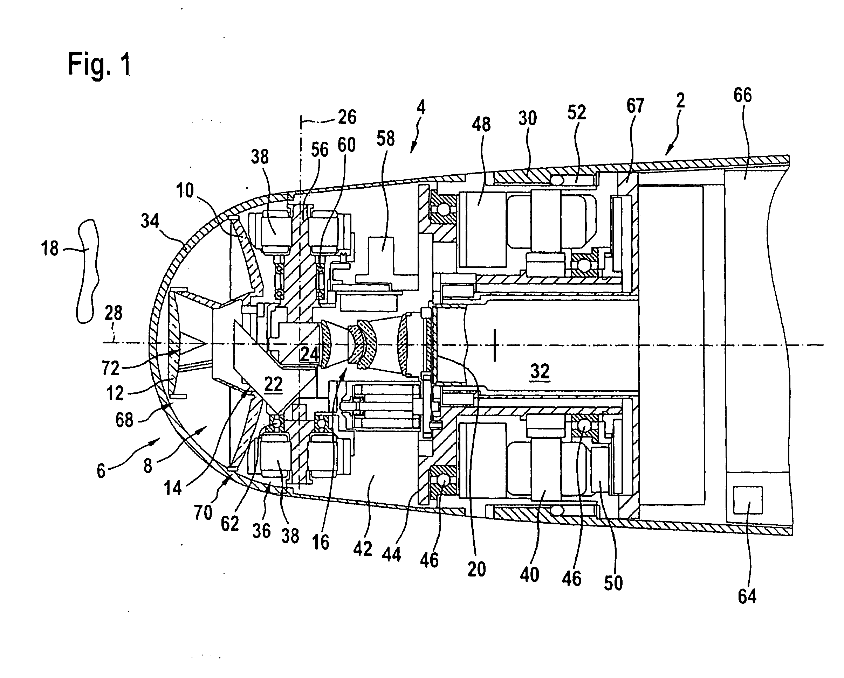

Fig. 1 zeigt in einer schematischen Längsschnittdarstellung den vorderen Teil eines Lenkflugkörpers 2 und dort insbesondere einen Suchkopf 4 an dessen vorderer Spitze. Der Suchkopf 4 ist mit einem optischen System 6 ausgestattet, das in Form einer Cassegrainoptik ausgeführt ist. Das optische System 6 umfasst eine Eingangsoptik 8 mit einem konkaven Primärspiegel 10 und einem konvexen Fangspiegel 12. Über ein optisches Gelenk 14 ist die Eingangsoptik 8 optisch mit einer als Detektorobjektiv ausgeführten Detektoroptik 16 verbunden, durch die eine Objektszene 18 in Verbindung mit der Eingangsoptik 8 und dem optischen Gelenk 14 auf einen Detektor 20 abgebildet wird.

Das optische Gelenk 14 ist aus zwei Prismenblöcken 22, 24 gebildet, die zueinander beweglich ausgeführt sind. Hierbei ist der erste Prismenblock 22 relativ zum zweiten Prismenblock 24 um eine Nickachse 26 schwenkbar und beide Prismenblöcke 22, 24 sind um eine Rollachse 28 rotierbar, die in der Axialrichtung des Lenkflugkörpers 2 liegt. Der erste Prismenblock 22 ist fest mit der Eingangsoptik 8 verbunden, so dass auch diese um die Nickachse 26 und Rollachse 28 drehbar ist. Die Detektoroptik 16 ist fest mit dem zweiten Prismenblock 24 verbunden, so dass sie ebenfalls im regulären Betrieb des Suchkopfs 4 um die Rollachse 28 drehbar ist.

Der Detektor 20 ist starr mit einem Außengehäuse 30 des Suchkopfs 4 beziehungsweise des Lenkflugkörpers 2 verbunden ist. Ein Kühler 32 dient zum Kühlen des Detektors 20, der im infraroten Spektralbereich zwischen 3 µm und 5 µm empfindlich ist.

Die Erfassung des Sehfelds, das einen Durchmesser von 5,5° hat und in dem die Objektszene 18 liegt, erfolgt durch einen Dom 34 mittels der Cassegrain-Eingangsoptik 8, deren Bildfeld über das optische Gelenk 14 und das anschließende Linsensystem der Detektoroptik 16 auf den strukturfesten Matrixdetektor 20 geführt wird. Das optische Gelenk 14 erlaubt es, die optische Achse der Eingangsoptik 8 innerhalb eines großen Schielwinkelbereichs von ± 90° zu positionieren, wobei das Sehfeld der Eingangsoptik 8 immer auf den Detektor 20 abgebildet wird. Durch Drehung des gesamten optischen Systems 6 um die Rollachse 28 kann die optische Achse der Eingangsoptik 8 in eine beliebige Richtung der vorderen Hemisphäre positioniert werden.

Die Positionierung der optischen Achse der Eingangsoptik 8 wird durch einen Nickantrieb 36 an der Nickachse 26 mit zwei Teilmomentengebern 38 und einem Rollantrieb 40, der nur einen Roll-Momentengeber aufweist, angetrieben. Der Nickantrieb 36 ist in die beiden Teilmomentengeber 38 zweigeteilt, um zum einen das Bauvolumen optimal auszunutzen und zum anderen um das Trägheitsmoment des gewuchteten Rollrahmens 44 zu minimieren. Hierzu sind die beiden Teilmomentengeber 38 symmetrisch zueinander in Bezug zur Rollachse 28 angeordnet. Außerdem ist jeder der Teilmomentengeber 38 symmetrisch um die Nickachse 26 positioniert. Hierdurch wird eine sehr symmetrische Gewichtsverteilung erreicht, sodass Gegengewichte weitgehend vermieden werden können. Somit kann das Trägheitsmoment des gewuchteten Rollrahmens 44 gering gehalten werden. Die beiden Teilmomentengeber 38 werden von einer gemeinsamen Ansteuerelektronik 42 gesteuert. Dazu sind die komplementären Wicklungen der Teilmomentengeber 38 in Reihe geschaltet und werden von einer gemeinsamen Endstufe angesteuert und kommutiert. Zur Maximierung des Moments sind beide Teilmomentengeber 38 zueinander ausgerichtet, sodass das resultierende Gesamtmoment maximal ist.

Das gesamte optische System 6 ist im Rollrahmen 44 gelagert, der wiederum durch ein Rollachsenlager 46 gegen das Außengehäuse 30 abgestützt ist. Die Ansteuerung des Rollantriebs 40 wird durch eine Ansteuerelektronik 48 durchgeführt, wobei ein Winkelgeber 50 die genaue Winkelposition des Rollrahmens 44 in Bezug auf eine festgelegte Ausgangsposition sensiert. Durch Ringdämpfer 52 wird eine Dämpfung des Suchkopfs 4 gegen Vibrationen erreicht. Dieses zusätzliche passive Dämpfersystem zwischen dem hinteren Teil des Lenkflugkörpers 2 und einem inertialen Navigationssystem 66, das an einen Trägerflansch 67 befestigt ist, verringert den Einfluss von Körperschall auf das inertiale Navigationssystem 66.

Innerhalb des Rollrahmens 44 ist ein Nicksystem 56 um die Nickachse 26 drehbar gelagert, zu dem auch die Eingangsoptik 8 und der erste Prismenblock 22 gehören. Die aktuelle Winkelposition des Nicksystems 56 wird durch einen Winkelgeber 58 überwacht. Die beiden Winkelgeber 50, 58 sind mit hochgenauen optischen Abgriffen versehen, sodass eine hochgenaue Richtungsbestimmung der optischen Achse relativ zur Suchkopfbasis, beispielsweise relativ zur Rollachse 28 oder einer anderen vorgegebenen Richtung, möglich ist. Das Nicksystem 56 ist in Nickachsenlagern 60, 62 gelagert, wobei das Nickachsenlager 60 ein Festlager ist und das Nickachsenlager 62 ein Loslager. Der Antrieb und die Lagerung des Rollrahmens 44 sind derart ausgeführt, dass der Rollrahmen 44 frei durchdrehbar ist.

Zur Zielverfolgung und zur Steuerung des Lenkflugkörpers 2 ist der Lenkflugkörper 2 mit einem Steuersystem 64 ausgestattet, das in Fig. 1 nur schematisch angedeutet ist. Zur Steuerung des Lenkflugkörpers 2 stabilisiert das Steuersystem 64 die inertiale Sichtlinie zu einem Ziel durch eine so genannte Semi-Strap-Down-Rechnung. Hierzu misst ein starr in den Lenkflugkörper 2 integriertes inertiales Navigationssystem 66, das ebenfalls nur schematisch angedeutet ist, die Lenkflugkörperbeschleunigung und Lenkflugkörperrotation in drei Hauptachsen des Lenkflugkörpers 2. Das Navigationssystem 66 besteht aus drei orthogonalen Beschleunigungs- beziehungsweise Rotationssensoren. Durch zeitliche Aufintegration der Bewegungsgleichungen lässt sich zu jedem Zeitpunkt nach dem Start die Position, die Orientierung und die Geschwindigkeit des Lenkflugkörpers 2 in einem inertialen Referenz-Koordinatensystem berechnen.

Weiterhin kann über die hochpräzisen Winkelgeber 50, 58 die Lage der optischen Achse der Eingangsoptik 8 im flugkörpereigenen Koordinatensystem gemessen werden. Als dritte Komponente kann wiederum innerhalb des Sehfelds des Detektors 20 beziehungsweise des Suchkopfs 4 die Winkel-Position eines Punkt-Ziels relativ zur optischen Achse der Eingangsoptik 8 gemessen werden. Diese Messung kann anhand von Bildverarbeitung aus den Daten des Detektors 20 erfolgen. Aus diesen Daten kann nun die momentane Lage der Sichtlinie vom Suchkopf 4 zum Ziel in das flugkörpereigene Koordinatensystem transformiert werden und durch zeitliche Ableitung die für die Flugkörper-Steuerung wichtige Größe der momentanen inertialen Sichtliniendrehrate berechnet werden.

Für eine erfolgreiche Ansteuerung des Ziels wird der Lenkflugkörper 2 vom Steuersystem 64 so gesteuert, dass die inertiale Sichtliniendrehrate zu Null geregelt wird. Mit Hilfe dieser so genannten Proportionalnavigation steuert der Lenkflugkörper 2 auf e-nergieeffiziente Weise das Ziel an. Ein weiterer Regelkreis führt die optische Achse der Eingangsoptik 8 durch entsprechende Ansteuerungen des Nickantriebs 36 und Rollantriebs 40 so nach, dass die Eingangsoptik 8 immer in Richtung des Ziels ausgerichtet bleibt.

Zur Verringerung von Bildverarbeitungsfehlern, die durch eine Punktbildschwankung hervor gerufen werden, wird bei der Bildverarbeitung das Verfahren angewandt, dass beim Auslesen der Detektorzellen über stets vier Detektorzellen summiert wird, das Signal durch vier geteilt wird und das Signal einer der Detektorzellen zugewiesen wird, beispielsweise stets der oberen linken Detektorzelle der vier im Quadrat zueinander angeordneten Detektorzellen. Auf diese Weise wird ein Zielpunkt zwar hinsichtlich seiner Auflösung schlechter erkannt, er kann jedoch auch bei einer solchen Mehrzellensummation zuverlässig im Sehfeld lokalisiert werden und dessen Position kann relativ zur optischen Achse bestimmt werden, wobei dies insbesondere durch eine Schwerpunktbildung besonders genau erfolgen kann.

Der Aufbau des Suchkopfs 4 und der optischen Strahlführung innerhalb des Suchkopfs 4 sind darauf optimiert, die geforderte Funktionalität mit der geforderten Leistung in kleinstem Bauvolumen unterzubringen. Das Bauvolumen ist vorgegeben durch die mechanische Struktur der Aktorik und der Tatsache, dass die Eingangsoptik 8 um **±** 90° geschwenkt werden kann. Die Kompaktheit wird auch erreicht durch Verwendung besonders dicker Linsen mit hohem Brechungsindex, vorzugsweise aus Silizium- oder Gallium-Arsenid, sodass die Ausdehnung des Lichtkanals insbesondere im optischen Gelenk 14 und in der Detektoroptik 16 klein gehalten ist. Außerdem ist die Anzahl der optischen Elemente minimiert. Das Optikdesign ist weiterhin ein Kompromiss zwischen Eintrittspupille, Sehfeld und Störlichtempfindlichkeit derart, dass eine maximal mögliche Eintrittspupille bei vorgegebenem Sehfeld und ausreichender Störlichtempfindlichkeit erreicht wird.

Als weitere Verbesserung ist die Eingangsoptik 8 mit einer inneren Schute 68 am Primärspiegel 10 und einer äußeren Schute 70 am Fangspiegel 12 versehen. Die beiden Schuten - oder Abschirmblenden - schützen die Optik jeweils vor unerwünschtem Lichteinfall von der Seite. Sie sind auch einzeln vorteilhaft. Besonders vorteilhaft ist außerdem eine Keilblende 72 in der Mitte des Fangspiegels 12 zur Falschlichtunterdrückung und insbesondere zur Unterdrückung einer Sonnenblendung.

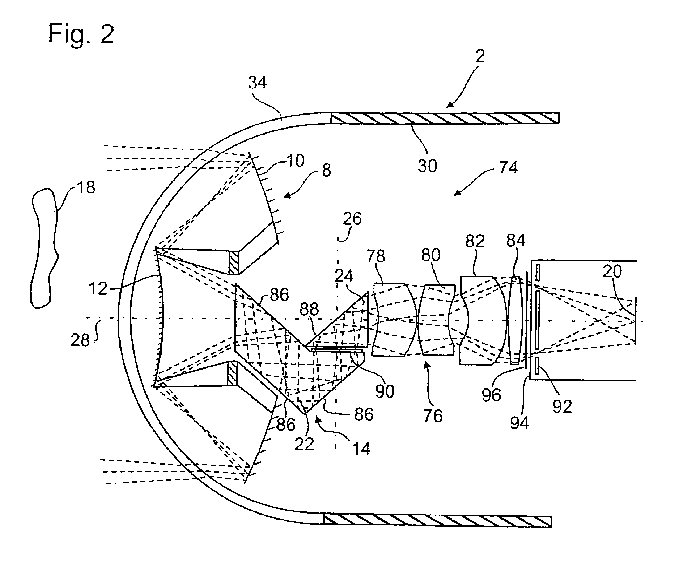

Figur 2 zeigt eine alternative katadioptrische Optik 74, die anstelle des optischen Systems 6 aus Figur 1 im Suchkopf 4 verwendbar ist. Die nachfolgende Beschreibung beschränkt sich im Wesentlichen auf die Unterschiede zum Ausführungsbeispiel auf Figur 1, auf das bezüglich gleich bleibender Merkmale und Funktionen verwiesen wird. Nicht erwähnte Merkmale, insbesondere des Suchkopfs 4; sind im folgenden Ausführungsbeispiel übernommen, ohne dass sie erneut beschrieben sind.

In Fig. 2 ist der Flugkörper 2 nur schematisch angedeutet, die Darstellung des Suchkopfs ist - abgesehen vom optischen System 6 - weggelassen. Die katadioptrische Optik 74 ist gleich ausgeführt wie das optische System 6 aus Fig. 1 bis auf eine Variation der Detektoroptik 76, die sich durch ein anderes Linsensystem mit vier Linsen 78, 80, 82, 84 auszeichnet. Die Dicke der Linsen 78, 80, 82, 84 beträgt jeweils mehr als 60 % von deren Radius. Auch das optische Gelenk 14 ist im Wesentlichen gleich ausgeführt, wobei der erste Prismenblock 22 drei Spiegelflächen 86 und der zweite Prismenblock 24 eine Spiegelfläche 88 aufweist. An Stelle des monolithischen ersten Prismenblocks 22 sind auch noch mehrere Prismen, beispielsweise drei Prismen mit jeweils einer Spiegelfläche möglich. Zwischen den beiden Prismenblöcken 22, 24 besteht ein Luftspalt, in dem in diesem Ausführungsbeispiel eine Ringblende 90 angeordnet ist. Diese dient dazu, den Streulichtanteil auf den Detektor 20 zu verringern. Im Luftspalt kann ein Schutzelement zum Schutz gegen Blendstrahlung angeordnet werden, beispielsweise einen nichtlinearen optischen Filter oder einen thermisch schaltbaren Filter.

In der Austrittspupille der Detektoroptik 76 ist eine Kaltblende 92 angeordnet, die - analog zum Primärspiegel 10 - eine Mittenausblendung aufweist. Hierdurch kann eine hohe so genannte Kaltblendeneffektivität, insbesondere von 100%, erreicht werden, wobei die Infrarot-Detektorelemente des Matrixdetektors 20 keine warmen Strukturwände sehen und das Infrarot-Signal-Rausch-Verhältnis sehr gut ist. Die Kaltblende 92 des Detektors 20 ist identisch mit der Aperturblende des optischen Strahlengangs, ist also optisch dem Primärspiegel 10 nachgebildet. In der Nähe der Austrittspupille der Detektoroptik 76, beispielsweise zwischen einem Kühlerfenster 94 eines Kühlers zum Kühlen des Detektors 20 und der Detektoroptik 76, ist ebenfalls eine zugängliche Stelle, in der ein Filter 96 mit einer ortsabhängigen Strahlendurchlässigkeit angeordnet ist. Der Filter 96 kann ein Spektralfilter sein, der ein oder mehrere Frequenzbänder ortsabhängig filtert, die Filterwirkung ist also an unterschiedlichen Orten verschieden, wobei die ortsabhängige Strahlendurchlässigkeit größer Null ist, also bei vorhandener Strahlungsdurchlässigkeit unterschiedlich stark gefiltert wird. Ebenfalls möglich ist ein Element zur Abblendung der Optik, beispielsweise über ein Filterrad.

Generell kann anstelle des Filters 96 oder zusätzlich dazu ein gleichmäßiger Spektralfilter steuerbar eingebracht werden, um eine multispektrale Erweiterung des Detektors 20 zu erreichen. Alternativ dazu kann der Detektor 20 als Multispektraldetektor ausgeführt sein oder es sind mehrere Detektoren mit unterschiedlicher spektraler Empfindlichkeit vorhanden, die z.B. über einen dichroitischen Strahlteiler beleuchtet werden.

Die geometrischen Daten der katadioptrischen Optik 74 aus Fig. 2 sind in der folgenden Tabelle wiedergegeben:

| Fläche | Radius | Dicke | Aperturradius | Material | Element |
|---|---|---|---|---|---|
| 1 | 37,0 | 2,0 | 36,0 | Saphir | Dom |
| 2 | 35,0 | 5,8930 | 34,0 | Luft | |
| 3 | -- | 18,8940 | 16,0 | Luft | |
| 4 | -56,4815 | -13,2106 | 27,1300 | Reflexion | Spiegel 1 |
| 5 | -- | -5,6834 | 10,0 | Luft | |
| 6 | -- | -0,4300 | 9,7523 | Luft | |
| 7 | -30,5077 | 6,1134 | 11,1000 | Reflexion | Spiegel 2 |
| 8 | -- | 5,6436 | 7,6356 | Luft | |
| 9 | -- | -- | 6,3538 | Luft | |
| 10 | 214,8930 | 1,0 | 6, 7400 | Si-4 | |
| 11 | -- | -- | 6,6500 | Luft | |
| 12 | -- | 6,7800 | 6,6500 | Si-4 | Eintritt |
| 13 | -- | -12,0 | 9,0 | Reflexion | Prisma |
| 14 | -- | 10,0 | 7,0 | Reflexion | Prisma |
| 15 | -- | -5,6250 | 7,0 | Reflexion | Prisma |
| 16 | -- | -0,5163 | 4,0 | Luft | |
| 17 | -- | -0,7787 | 4,0 | Luft | |
| 18 | -28,8046 | -5,0800 | 4,5000 | Si-4 | Eintritt |
| 19 | -- | 4,7700 | 6,5000 | Reflexion | Prisma |
| 20 | -- | 1,8600 | 5,0 | Luft | |
| 21 | -13,2915 | 6,5500 | 4,6100 | Si-4 | Linse 78 |
| 22 | -13,2389 | 0,3200 | 6,2500 | Luft | |
| 23 | 14,5897 | 5,0200 | 5,8300 | Si-4 | Linse 80 |
| 24 | 10,7248 | 3,4400 | 4,2000 | Luft | |
| 25 | -7,2862 | 6,7000 | 4,28 | Si-4 | Linse 82 |
| 26 | -12,2772 | 0,1900 | 7,4400 | Luft | |
| 27 | 81,4646 | 2,3900 | 7,4600 | Si-4 | Linse 84 |
| 28 | -50,1287 | 0,8300 | 7,3800 | Luft | |

Die konischen und polynomischen Asphärendaten sind in der folgenden Tabelle wiedergegeben:

| Fläche | Cc | ad | ae | af | ag |
|---|---|---|---|---|---|
| 4 | -1,1229e+00 | -- | -8,0931e-11 | 2,6662e-14 | -- |
| 7 | -1,1423e+01 | -- | 2,2354e-08 | -2,4184e-11 | -- |
| 10 | -- | -5,4494e-05 | -- | -- | -- |
| 21 | -- | -6,2526e-05 | -1,0365e-06 | -6,8683e-08 | -- |
| 24 | 2,0860e+00 | -- | 1,5751e-06 | 1,0942e-07 | -- |
| 28 | -- | 1,8178e-05 | -3,3076e-07 | 1,0863e-09 | -- |

Die optischen Daten sind hierbei:

| | |
|---|---|
| Spektralbereich in µm | 4 bis 5 |
| Gesichtsfeld in ± Grad | 2,75 |

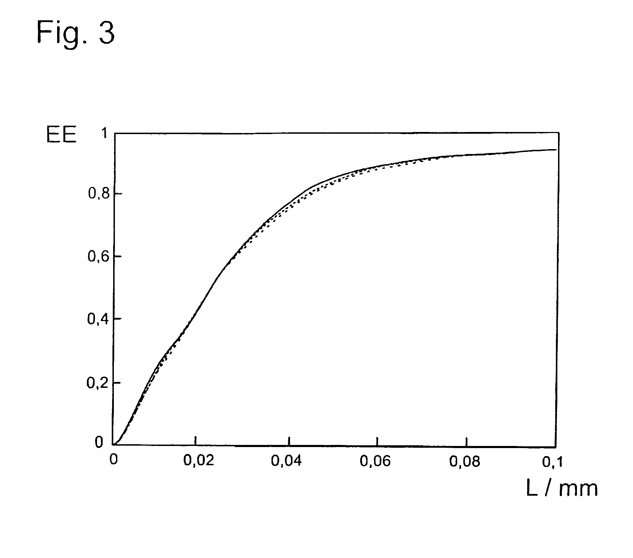

Figur. 3 zeigt die Punktenergie EE (Ensquared Energy) pro Detektorfläche, mit der ein Punktbild der Objektszene 18 auf dem Detektor 20 abgebildet wird, aufgetragen gegen die Kantenlänge L eines Quadrats in der Bildebene bzw. eines Pixels bzw. eines Detektorelements des Detektors 20 mit der Kantenlänge L, bzw. das Bildelement-Rastermaß des Detektors 20. Das Bildelement-Rastermaß beträgt 30 µm. Während die durchgezogene Linie den Energieverlauf eines in der optischen Achse liegenden Bildpunkts zeigt, zeigt die weiter gestrichelte Linie den Energieverlauf eines Bildpunkts am Bildrand, nämlich bei 2,75° Entfernung zur optischen Achse. Die feiner punktierte Linie zeigt einen Bildpunkt mit einem Abstand von 1,77° von der optischen Achse der Eingangsoptik 8.

Es ist zu sehen, dass die Energieverläufe an allen drei dargestellten Abständen von der optischen Achse sehr eng beieinander liegen, eine Punktbildschwankung also bei unterschiedlichen Bildelement-Rastermaßen über den gesamten Sehfeldwinkel im Wesentlichen gleich ist. Hierdurch ist die katadioptrische Optik 74 universell für verschiedene Detektoren mit verschiedenen Rastermaßen einsetzbar. Die Punktbildenergie, die in einem Quadrat der Kantenlänge von 40 µm oder 30 µm eingeschlossen ist, liegt bei etwa 78 % bzw. 67 % in der optischen Achse und etwa 76 % bzw. 65 % am Sehfeldrand und ist damit nicht besonders hoch. Dies liegt an der gezielten Abberation oder Defokussierung der Punktabbildung auf den Detektor 20, die bewirkt, dass die Abbildung der Punktquelle so groß ist, dass stets zumindest zwei. Detektorzellen zumindest teilweise von einer Fläche überdeckt sind, die genau 80 % der Punktbildenergie einschließt, oder anders ausgedrückt, dass die Abbildung der Punktquelle so groß ist, dass es über mehrere Pixel verteilt ist und somit die so genannte Punktbildmodulation reduziert ist.

Die Detektoroptik 76 korrigiert Abbildungsfehler, die durch die Cassegrain-Eingangsoptik 8 verursacht werden, in der Art und Weise, dass die Punktbildenergien auf jedem Punkt der sensiblen Detektorfläche in einem Toleranzband von 5 % liegen. Dies wird durch die Kontrolle des Farblängsfehlers in Verbindung mit der kontrollierten Bildfeldwölbung erreicht. Die Bildelemente des Detektors 20 sind hierbei quadratisch und durch einen unsensiblen Steg jeweils voneinander getrennt. Der Verlauf der Ensquared Energy bezieht sich hierbei auf die Abbildung eines Punktbilds einer Punktlichtquelle in unendlicher Ferne auf den Detektor 20.

Weiter erlaubt das erfindungsgemäße Design, sowohl der Optik aus Fig. 1 als auch aus Fig. 2 eine gute passive Temperaturkompensation im Bereich von -60° bis +90°. Hierzu sollte der Primärspiegel 10 aus einem Material mit einem ersten Temperaturausdehnungskoeffizienten bestehen, z. B. aus Aluminium, und das Trägermaterial des Sekundärspiegelhalters, der den Primärspiegel 10 mit dem Fangspiegel 12 verbindet, aus einem Material mit einem geringeren Temperaturausdehnungskoeffizienten. Zweckmäßigerweise besteht auch der Fangspiegel 12 aus diesem Material. Hierdurch kann bei Temperaturausdehnung der Eingangsoptik 8 ein optischer Temperaturgang erreicht werden, der den Temperaturgang der restlichen Optik entgegen wirkt. Es kann der Verlauf der Energiekennzahl im Bereich der oben genannten Temperaturen innerhalb des Toleranzbandes gehalten werden. Als Material geeignet ist Titan oder Silizium. Besonders geeignet ist auch eine FeNi36-Legierung, die durch ihre Anomalität eines kleinen oder zum Teil negativen Wärmeausdehnungskoeffizienten bekannt ist.

### Bezugszeichenliste

- 2: Lenkflugkörper
- 4: Suchkopf
- 6: optisches System
- 8: Eingangsoptik
- 10: Primärspiegel
- 12: Fangspiegel
- 14: optisches Gelenk
- 16: Detektoroptik
- 18: Objektszene
- 20: Detektor
- 22: Prismenblock
- 24: Prismenblock
- 26: Nickachse
- 28: Rollachse
- 30: Außengehäuse
- 32: Kühler
- 34: Dom
- 36: Nickantrieb
- 38: Teilmomentengeber
- 40: Rollantrieb
- 42: Ansteuerelektronik
- 44: Rollrahmen
- 46: Rollachsenlager
- 48: Ansteuerelektronik
- 50: Winkelgeber
- 52: Ringdämpfer
- 54: Schleifring
- 56: Nicksystem
- 58: Winkelgeber
- 60: Nickachsenlager
- 62: Nickachsenlager
- 64: Steuersystem
- 66: Navigationssystem
- 68: innere Schute
- 70: äußere Schute
- 72: Keilblende
- 74: katadioptrische Optik
- 76: Detektoroptik
- 78: Linse
- 80: Linse
- 82: Linse
- 84: Linse
- 86: Spiegelfläche
- 88: Spiegelfläche
- 90: Ringblende
- 92: Kaltblende
- 94: Kühlerfenster
- 96: Filter

## Patentansprüche

1. Verfahren zum Steuern eines Lenkflugkörpers (2) mit einem einen Detektor (20) aufweisenden Suchkopf (4), bei dem eine Objektszene (18) auf den Detektor (20), der eine Vielzahl von Detektorzellen umfasst, abgebildet und ein erhaltenes Bild ausgewertet wird und ein Steuersystem (62) den Lenkflugkörper (2) anhand von Daten aus der Bildauswertung steuert,
**dadurch gekennzeichnet,**
**dass** die Abbildung auf den Detektor (20) durch ein Detektorobjektiv (16, 76) mit mehreren Linsen (78, 80, 82, 84) erfolgt.

2. Verfahren nach Anspruch 1,
**dadurch gekennzeichnet,**
**dass** die Abbildung derart auf den Detektor (20) abgestimmt ist, dass bei Abbildung einer Punktquelle der Objektszene (18) auf der Detektorfläche die quadratische Fläche, die symmetrisch um die Punktabbildung liegt und in der 80% der Punktbildenergie eingeschlossen sind, bei jeder Lage des Punktbilds im Sehfeld des Detektors (20) größer als die Bildelement-Rasterfläche eines Bildelements des Detektors (20) und kleiner als das Vierfache davon ist.

3. Verfahren nach Anspruch 1 oder 2,
**dadurch gekennzeichnet,**
**dass** die Abbildung derart auf den Detektor (20) abgestimmt ist, dass bei Abbildung einer Punktquelle der Objektszene (18) auf der Detektorfläche die von jeder möglichen und symmetrisch um die Punktabbildung liegenden quadratischen Fläche eingeschlossene Punktbildenergie in einem Toleranzband von 10 % verbleibt.

4. Verfahren nach einem der vorhergehenden Ansprüche,
**dadurch gekennzeichnet,**
**dass** die Abbildung derart auf den Detektor (20) abgestimmt ist, dass bei Abbildung einer Punktquelle der Objektszene auf der Detektorfläche in jeder im Sehfeld des Detektors (20) möglichen quadratischen Fläche, die symmetrisch um die Punktabbildung liegt und deren Kantenlänge das 1,5-fache des Bildelement-Rastermaßes beträgt, die eingeschlossene Punktbildenergie in einem Bereich von 80% ± 10% liegt.

5. Verfahren nach einem der vorhergehenden Ansprüche,
**dadurch gekennzeichnet,**
**dass** beim Auslesen der Detektorzellen über mehrere Detektorzellen summiert wird, ein Quotient gebildet wird und dieser einer der Detektorzellen, über die summiert wurde, zugewiesen wird.

6. Verfahren nach einem der vorhergehenden Ansprüche,
**dadurch gekennzeichnet,**
**dass** das Steuersystem (62) einen abgebildeten Zielpunkt anhand einer Mehrzellensummation innerhalb des Sehfeldes des Suchkopfs (4) lokalisiert und die Winkel-Position des Zielpunkts relativ zu einer optischen Achse des Suchkopfs (4) bestimmt.

7. Suchkopf (4) für einen Lenkflugkörper (2) umfassend einen Detektor (20) mit einer Vielzahl von Detektorzellen, ein optisches System (6, 74) zum Abbilden einer Objektszene (18) auf den Detektor (20) mit einer Primäroptik, die einen transparenten Dom und innerhalb dessen eine Eingangsoptik (8) aufweist, einem Prismengelenk und einem Roll-Nick-System zum Bewegen zumindest der Eingangsoptik (8) um eine Rollachse (28) und eine Nickachse (26),
**dadurch gekennzeichnet,**
**dass** das optische System (6, 74) eine Detektoroptik (16, 76) mit mehreren Linsen (78, 80, 82, 84) umfasst.

8. Suchkopf (4) nach Anspruch 7,
**dadurch gekennzeichnet,**
**dass** der Detektor (20) und das optische System (6, 74) so aufeinander abgestimmt sind, dass bei Abbildung einer Punktquelle der Objektszene (18) auf der Detektorfläche die von jeder möglichen und symmetrisch um die Punktabbildung liegenden quadratischen Fläche eingeschlossene Punktbildenergie in einem Toleranzband von 10 % verbleibt.

9. Suchkopf (4) nach Anspruch 8,
**dadurch gekennzeichnet,**
**dass** die Konstanz der Punktbildenergie im gesamten Sehfeld des Detektors (20) durch eine Kombination von Farblängsfehler und Bildfeldwölbung des optischen Systems (6, 74) bewirkt ist.

10. Suchkopf (4) nach Anspruch 9,
**dadurch gekennzeichnet,**
**dass** ein Farblängsfehler des optischen Systems (6, 74) im Spektralbereich des Detektors (20) zumindest 100 µm beträgt.

11. Suchkopf (4) nach einem der Ansprüche 7 bis 10,
**dadurch gekennzeichnet,**
**dass** die Eingangsoptik (8) einen konkaven Primärspiegel (10) und einen konvexen Sekundärspiegel (12) aufweist, der von einem Sekundärspiegelhalter gehalten ist, dessen Material eine zumindest teilweise Temperaturkompensation des optischen Systems (6, 74) bewirkt.

12. Suchkopf (4) nach einem der Ansprüche 7 bis 11,
**dadurch gekennzeichnet,**
**dass** die Detektoroptik (16, 76) zumindest drei Linsen (78, 80, 82, 84) umfasst, wobei die Dicke der drei Linsen (78, 80, 82, 84) vorzugsweise jeweils zumindest 60% von deren Radius beträgt.

13. Suchkopf (4) nach einem der Ansprüche 7 bis 12,
**dadurch gekennzeichnet,**
**dass** die Eingangsoptik (8) einen konkaven Primärspiegel (10) und einen konvexen Sekundärspiegel (12) aufweist und das Prismengelenk in einen Bauraum zwischen den beiden Spiegeln (10, 12) hineinragt.

14. Suchkopf (4) nach einem der Ansprüche 7 bis 13,
**dadurch gekennzeichnet,**
**dass** die Eintrittspupille der Eingangsoptik (8) in die Austrittspupille der Detektoroptik (16, 76) abgebildet ist, in der eine Kaltblende mit einer Mittenausblendung angeordnet ist.

15. Suchkopf (4) nach einem der Ansprüche 7 bis 14,
**dadurch gekennzeichnet,**
**dass** zwischen der Detektoroptik (16, 76) und der Austrittspupille der Detektoroptik (16, 76) ein Filter (96) mit einer ortsabhängigen Strahlendurchlässigkeit angeordnet ist.

16. Suchkopf (4) nach einem der Ansprüche 7 bis 15,
**dadurch gekennzeichnet,**
**dass** das Roll-Nick-System einen Nickantrieb (36) aufweist, der um die Nickachse (26) positioniert ist und/oder dass das Roll-Nick-System einen zweigeteilten Nickantrieb (36) aufweist, dessen beide Teilmomentengeber (38) einander symmetrisch in Bezug zu einer Rollachse (28) des Roll-Nick-Systems gegenüber stehen.

17. Suchkopf (4) nach Anspruch 16,
**dadurch gekennzeichnet,**
**dass** beide Teilmomentengeber (38) von einer gemeinsamen Ansteuerelektronik (42) betrieben werden, die komplementären Wicklungen der Teilmomentengeber (38) in Reihe geschaltet sind und von einer gemeinsamen Endstufe angesteuert und kommutiert werden.
